# EUROPÄISCHE PATENTANMELDUNG

(11) **EP 2 377 654 A2**
(43) Veröffentlichungstag der Anmeldung: **19.10.2011**
(21) Anmeldenummer: 11161245.3
(22) Anmeldetag: 06.04.2011
(51) Int. Cl.: B25J 21/02

(54) **Vorrichtung zum Handhaben von in einem abgeschlossenen Arbeitsraum befindlichen Gegenständen**

(30) Priorität: 19.04.2010 DE 102010015770
(71) Anmelder: Askion GmbH, 07549 Gera (DE)
(72) Erfinder: Leuthold, Dirk, 07554 Brahmenau (DE); Hülße, Erhardt, 07586 Bad Köstritz (DE); Belke, Marianne, 07747 Jena (DE)
(74) Vertreter: Oehmke, Volker

(57) **Zusammenfassung**

Die Erfindung betrifft eine Vorrichtung zum Handhaben von Gegenständen in einem abgeschlossenen Arbeitsraum (1) mit Handschuhen (7), die dadurch gekennzeichnet ist, dass ein raffbarer Balg (5) vorhanden ist, der mittels ersten und zweiten Verbindungselementen (8, 9) mit einer Wand (2) des Arbeitsraumes (1) sowie mit einer Stulpe (7.1) eines Handschuhs (7) verbunden ist und einen Eingriff durch eine Öffnung (3) in der Wand (2) des Arbeitsraumes (1) erlaubt, dass ferner die Außenabmaße des zweiten Verbindungselements (9) in einer Ebene parallel zur Öffnung (3) größer als die freien Innenabmaße der Öffnung (3) sind, wodurch die Öffnung (3) für das zweiten Verbindungselement (9) als Anschlag wirkt und ein Eintreten des Balges (5) in den Arbeitsraum (1) verhindert wird und dass ein Verschlusselement (4) vorhanden ist, durch welches der von dem Balg (5) umgrenzte Raum (6) bei vollständig zurückgezogenem Handschuh (7) über die erste Stirnseite (5.1) gegen den Arbeitsraum (1) abschließbar ist.

## Beschreibung

Die Erfindung betrifft eine Vorrichtung zum Handhaben von Gegenständen in einem abgeschlossenen Arbeitsraum mit Handschuhen, die durch Öffnungen in den Wänden des Arbeitsraums einführbar sind und aus dem Arbeitsraum vollständig zurückgezogen werden können, wie dies gattungsgemäß aus der DE 1 598 480 A1 bekannt ist.

In vielen Bereichen von Produktion, Forschung und Medizin werden als Handschuhboxen bezeichnete Arbeitsräume verwendet, die gegen ihre Umgebung durch Wände abgeschlossen sind. In Ihnen werden vornehmlich Gegenstände, aber auch Organismen, Zellkulturen, Organe oder Gewebe gehandhabt. In diesen Arbeitsräumen werden in der Regel Bedingungen geschaffen, die gegen die Bedingungen der Umgebung des Arbeitsraumes abgegrenzt bleiben sollen. So können in den Arbeitsräumen z. B. keimarme, sterile, kalte, heiße, reizende (z. B. Haut oder Atemwege reizende), strahlende oder infektiöse (z. B. human-pathogene) oder Kombinationen dieser Bedingungen eingestellt sein. Durch die Arbeitsräume können auch Medien wie Gase, Flüssigkeiten oder Aerosole durchgeleitet werden. Betrieben werden solche Arbeitsräume je nach Anwendung bei Umgebungsdruck als auch mit Über- oder Unterdruck.

Die Gestaltung von manuellen Eingriffen in solche Arbeitsräume muss so erfolgen, dass eine sichere Abdichtung zwischen Arbeitsraum und Umgebung gegeben ist. Dies gebieten insbesondere die Erfordernisse des Arbeitsschutzes als auch die hohen Ansprüche an eine zuverlässige Prozessführung in den Arbeitsräumen. Weiterhin unterliegen die Handschuhe bei ihrer Verwendung unter z. B. heißen, kalten oder strahlenden Bedingungen oder beim Arbeiten mit z. B. organischen Lösungsmitteln einem starken Verschleiß.

In der US 2004/0158121 A1 ist eine aufblasbare, transparente Vorrichtung mit einem Arbeitsraum offenbart, durch den ein Medium geleitet wird. Durch Öffnungen in der Wand des Arbeitsraumes kann mit Handschuhen in den Arbeitsraum eingegriffen werden. Die Handschuhe und deren Stulpen sind in die Vorrichtung integriert. Die Handschuhe können aus dem Arbeitsraum zurückgezogen werden, wobei sie jedoch zumindest Bereiche einer jeden Stulpe wiederholt umgestülpt werden müssen. Dadurch wird das Material, insbesondere in den umzustülpenden Bereichen, mechanisch stark beansprucht. Eine solche Vorrichtung eignet sich nicht für tiefkalte Temperaturen, da das Material des Arbeitsraumes seine Flexibilität verlieren und spröde werden würde. Die Handschuhe stehen auch im zurückgezogenen Zustand mit den im Arbeitsraum vorhandenen Medien in Berührung und sind diesen andauernd ausgesetzt.

Eine weitere Lösung ist in der US 5,299,243 B1 beschrieben. In einen Arbeitsraum kann mittels eines Handschuhs eingegriffen werden, wobei der Handschuh lösbar mit der Wand des Arbeitsraumes verbunden ist. Durch die lösbare Verbindung ist der Handschuh bei Bedarf auswechselbar. Der Handschuh kann, z. B. für seine Auswechslung, aus dem Arbeitsraum zurückgezogen werden, wobei er jedoch mindestens teilweise umgestülpt werden muss. Der zurückgezogene Handschuh kann durch ein Verschlusselement von dem Arbeitsraum abgetrennt werden, wodurch der Handschuh nicht andauernd den Medien des Arbeitsraumes ausgesetzt ist und während einer Auswechslung des Handschuhs ein Stoffaustausch des Arbeitsraumes mit der Umgebung unterbunden ist. Nachteilig an dieser Lösung ist das zumindest teilweise Umstülpen des Handschuhs sowie der Umstand, dass raffbare, also in axialer Ausdehnung der Stulpe faltbare oder zu biegende, Teile der Stulpe in den Arbeitsraum ragen und dort zumindest über denjenigen Zeitraum, über den Handhabungen in dem Arbeitsraum erfolgen, den Medien ausgesetzt sind.

Eine Möglichkeit zur Vermeidung der wiederholten Umstülpung des Handschuhs ist in der DE 1 598 480 A1 gezeigt. Dabei sind Handschuhe mit Armstulpen lösbar mit einer Wand des Arbeitsraumes verbunden, wobei der obere Teil des Stulpens über eine aus dem Arbeitsraum herausragende, dem Stulpen angepasste, Feder gezogen und der untere Teil mit dem Handschuhende rückläufig durch das Federinnere in den Raum weisend geführt ist. Der Handschuh kann vollständig aus dem Arbeitsraum zurückgezogen werden, ohne dabei umgestülpt werden zu müssen. Kern der Lösung ist die Verwendung von elastischen, gegenüber den bei der Handhabung angewandten Kräften nachgiebigen, Materialien zum selbsttätigen Einhalten einer vorgesehenen Eingrifflänge in den Arbeitsraum. Durch diese konstruktive Lösung soll vermieden werden, dass Teile der Stulpe ungewollt in den Arbeitsraum gelangen, wie dies insbesondere bei mit Unterdruck betriebenen Arbeitsräumen der Fall sein kann. Nachteilig an der genannten Lösung ist das Fehlen eines Verschlusselementes, wodurch bei einem Austausch des Handschuhs ein Stoff- und/oder Energieaustausch zwischen dem Arbeitsraum und der Umgebung nicht sicher vermieden wird. Zudem muss jeweils der Handschuh zusammen mit seiner sehr langen, raffbaren Stulpe ausgetauscht werden, was einen hohen Materialbedarf und erhöhte Kosten zur Folge hat.

Der Erfindung liegt die Aufgabe zugrunde eine Möglichkeit aufzuzeigen, mittels der in einen Arbeitsraum befindliche Körper von außerhalb des Arbeitsraumes gehandhabt werden können, gleichzeitig ein unerwünschter Stoffaustausch vermieden wird und ein Energieaustausch zwischen Arbeitsraum und einer Umgebung des Arbeitsraumes stark reduziert ist. Weiterhin ist es Aufgabe der Erfindung eine Möglichkeit aufzuzeigen, bei der die für die Handhabung der Körper verwendeten Handschuhe nicht umgestülpt werden müssen und die Handschuhe leicht austauschbar sind. Zudem sollen die Handschuhe nicht andauernd schädigenden Einflüssen von Medien ausgesetzt sein.

Die Aufgabe wird mit einer Vorrichtung zum Handhaben von in einem abgeschlossenen Arbeitsraum befindlichen Körper mit Handschuhen, die durch Öffnungen in der Wand des Arbeitsraumes in den Arbeitsraum einführbar und mit der Wand verbunden sind, weiterhin mit außerhalb des Arbeitsraumes angeordneten und je einem Handschuh zugeordneten Bälgen, die in ihrer, zu den Öffnungen senkrecht weisenden axialen Ausdehnung, raffbar sind und den Arbeitsraum gegen die Umgebung abschließen und ferner je einen Raum umgrenzen, in welchen der zugeordnete Handschuh vollständig aus dem Arbeitsraum zurückgezogen werden kann, dadurch gelöst,
- dass jeder Balg in seiner nicht gerafften Grundform ein Hohlkörper mit einer ersten und einer zweiten Stirnseite ist, wobei an der ersten Stirnseite ein erstes Verbindungselement zur Verbindung des Balges mit der Wand und an der zweiten Stirnseite ein zweites Verbindungselement zur Verbindung einer Stulpe des Handschuhs mit dem Balg so angeordnet und ausgeführt sind, dass durch die verbundene Stulpe des Handschuhs der Raum über die zweite Stirnseite gegen eine Umgebung der Vorrichtung nach außen abgeschlossen ist und ein Eingriff in den Handschuh von der Umgebung der Vorrichtung aus möglich bleibt,
- dass die Außenabmaße des zweiten Verbindungselements in einer Ebene parallel zur Öffnung größer als die freien Innenabmaße der Öffnung sind, wodurch die Öffnung für das zweite Verbindungselement als Anschlag wirkt und ein Eintreten des Balges in den Arbeitsraum verhindert wird und
- dass ein Verschlusselement vorhanden ist, durch welches der von dem Balg umgrenzte Raum bei vollständig zurückgezogenem Handschuh über die erste Stirnseite gegen den Arbeitsraum abschließbar ist.

Unter dem Begriff "Körper" werden nachfolgend sowohl Gegenstände, als auch Organismen, Zellkulturen, Organe, Gewebe oder Flüssigkeiten und Lösungen verstanden, die auf einem Träger, in einem Gefäß oder aber frei im Arbeitsraum vorhanden sind.

Der Balg besteht vorzugsweise aus einem Material, welches so weit als möglich undurchlässig für in dem Arbeitsraum verwendete Medien ist und sich zugleich in seiner axialen Ausdehnung falten oder, z. B. teleskopartig, zusammenschieben lässt. Für viele Anwendungen kann der Balg aus Materialien auf der Basis von Kautschuk bestehen. Weiterhin sind alle geeigneten Stoffe wie z. B. kautschukähnliche Stoffe, sonstige Kunst- und Naturstoffe und Gewebe verwendbar. Abweichend von einer bevorzugten Grundform des Balges als Hohlzylinder, kann der Balg beispielsweise konisch oder als Faltenbalg ausgebildet sein. Es ist auch möglich, dass sich der Balg in einer Richtung falten oder zusammenschieben lässt, die nicht senkrecht zu den Öffnungen verläuft, wobei jedoch eine senkrechte Richtung bevorzugt ist.

Das Verschlusselement kann in einfachen Ausführungen als manuell zu bedienender Deckel ausgebildet sein. Es kann jedoch auch ein elektrisch, pneumatisch oder hydraulisch angesteuertes Verschlusselement sein.

Alle mit den Medien in Kontakt tretende Elemente der Vorrichtung bestehen vorteilhafterweise aus Materialien, die gegenüber den Medien chemisch möglichst wenig reaktiv sind oder von diesen in anderer Weise möglichst wenig angegriffen werden.

Es ist vorteilhaft, wenn der Balg umfänglich verlaufend angeordnete Versteifungen aufweist, wodurch eine Beibehaltung einer äußeren Form des Balges gewährleistet wird. Insbesondere dann, wenn in dem Arbeitsraum ein Unterdruck anliegt, kann es sonst zu einem unerwünschten Kollabieren des Balges kommen. Die Versteifungen können sowohl auf der Innen- als auch auf der Außenflächen des Balges angeordnet sein. Ebenfalls können diese in dem Material des Balges ganz oder teilweise eingeschlossen sein.

Es ist von großem Vorteil, wenn die Verbindung des Balges mit der Wand mittels einer lösbaren Verbindung ausgeführt ist. Ebenso ist es vorteilhaft, wenn die Verbindung der Stulpe des Handschuhs mit dem Balg eine lösbare Verbindung ist.

Lösbare Verbindungen können dabei aus einer Schraub-, Klemm-, Steck- und Bajonettverbindungen umfassenden Gruppe ausgewählt sein.

Es ist ein weiterer Vorteil der erfindungsgemäßen Vorrichtung, dass Handschuhe mit voneinander verschiedenen Eigenschaften mit der Stulpe verbunden werden können. Unter Beibehaltung nur je eines Balges können beispielsweise jeweils wärme- bzw. kälteisolierte Handschuhe, Handschuhe aus verschiedenen Materialien oder mit für einen Anwendungszweck angepassten Wanddicken oder Beschichtungen mit dem Balg verbunden sein.

In einem ersten Betriebszustand der erfindungsgemäßen Vorrichtung ist der Balg über das erste Verbindungselement mit der Wand verbunden und die Öffnung durch das Verschlusselement verschlossen. Der von dem Balg umfangene Raum ist über die ganze zweite Stirnseite gegen die Umgebung abgeschlossen. In diesem Zustand sind der Handschuh und die Stulpe nicht den Wirkungen der in dem Arbeitsraum vorhandenen Medien ausgesetzt.

In einem zweiten Zustand ist das Verschlusselement geöffnet und die Handschuhe durch Hineingreifen in den Handschuh in den Arbeitsraum eingeführt. Der Balg ist dabei in seiner axialen Ausdehnung gerafft, verbleibt aber aufgrund der Anschlagwirkung des zweiten Verbindungselementes vollständig außerhalb des Arbeitsraumes.

Die erfindungsgemäße Vorrichtung kann vorzugsweise mit Arbeitsräumen verbunden sein, in denen Körper unter Bedingungen gehandhabt werden, die aus einer von außerhalb physiologischer Bereiche liegenden thermischen, außerhalb physiologischer Bereiche liegenden chemischen, außerhalb physiologischer Bereiche liegenden strahlenden, infektiösen, keimarmen oder sterilen Bedingungen sowie deren Kombinationen umfassenden Gruppe ausgewählt sind. Als physiologischer Bereich werden hier durch den menschlichen Körper über eine bestimmte Expositionszeit ohne gesundheitliche Schäden tolerierbare Temperaturbereiche, Stoffkonzentrationen, Strahlendosen und dergleichen verstanden. Die Vorrichtung kann weiterhin als Modul in einer Vielzahl unterschiedlicher Arbeitsräume verwendet und nachgerüstet werden.

Die Erfindung wird nachfolgend anhand von Ausführungsbeispielen und Abbildungen näher erläutert. Dabei zeigen die Abbildungen:
Fig. 1 eine Ausführung der erfindungsgemäßen Vorrichtung mit aus einem Arbeitsraum zurückgezogenem Handschuh und
Fig. 2 eine Ausführung der erfindungsgemäßen Vorrichtung mit einem in den Arbeitsraum eingeführten Handschuh.

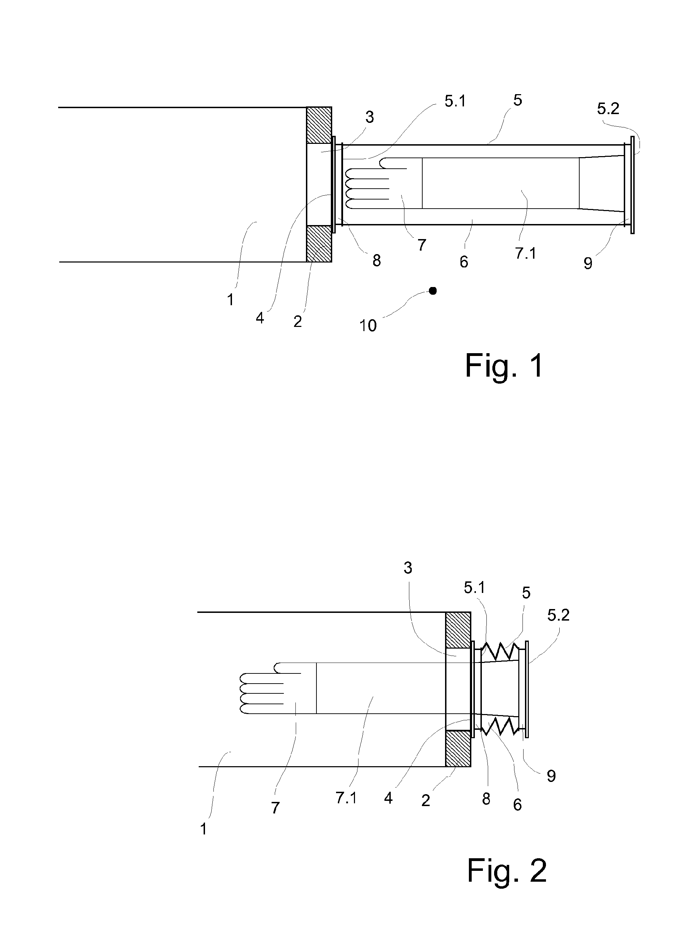

In einer Ausführung der Vorrichtung sind gemäß Fig. 1 und Fig. 2 ein gegen eine Umgebung 10 abgeschlossener Arbeitsraum 1 mit einer Öffnung 3 in einer Wand 2 des Arbeitsraumes 1, ein Balg 5 mit erster Stirnseite 5.1 und zweiter Stirnseite 5.2 sowie ein Handschuh 7 mit einer Stulpe 7.1 angeordnet.

Der Arbeitsraum 1 ist ein mit Luft als Medium gefüllter, tiefkalter Bereich mit Temperaturen von -100°C. Die Öffnung 3 ist durch ein als Deckel ausgebildetes Verschlusselement 4 gasdicht verschließbar, wie dies in Fig. 1 gezeigt ist. Der Balg 5 ist ein in Richtung seiner axialen Ausdehnung faltbarer Hohlzylinder aus Kautschuk. Der Balg 5 kann ferner aus anderen Materialien wie Nylon bestehen, das zusätzlich mit einer für Wasserdampf undurchlässigen Polhurethan-Beschichtung versehen ist. Der Balg 5 weist an seiner ersten Stirnseite 5.1 ein erstes Verbindungselement 8 auf, das als zweiteiliger Bajonettverschluss ausgebildet ist. Durch den Balg 5 wird ein Raum 6 umfangen, dessen jeweilige Größe von dem Grad der Faltung des Balges 5 abhängt. Ein Teil des Bajonettverschlusses ist mit der Wand 4 so verschraubt, dass die Öffnung 3 auf ihrer nach außen weisenden Seite vollständig von dem Bajonettverschluss umgeben ist. Ein zweiter Teil des Bajonettverschlusses ist kraftschlüssig mit dem Material der ersten Stirnseite 5.1 des Balges 5 verbunden. Durch das erste Verbindungselement 8 (die beiden zueinander passenden Teile des Bajonettverschlusses) ist der Balg 5 lösbar mit der Wand 2 verbunden und die Öffnung 3 auf ihrer nach außen weisenden Seite vollständig durch den Balg 5 umfangen.

An der zweiten Stirnseite 5.2 des Balges 5 ist ein zweites Verbindungselement 9 fest mit dem Material des Balges 5 verbunden. Das zweite Verbindungselement 9 ist als ein Klemmring ausgeführt, durch den das Material einer Stulpe 7.1 eines kälteisolierten Handschuhs 7 geklemmt ist. Durch die Klemmung des Materials der Stulpe 7.1 ist der Raum 6 über die zweite Stirnseite 5.2 gegen die Umgebung 10 abgeschlossen. Der über die Stulpe 7.1 mit dem Balg 5 verbundene Handschuh 7 erstreckt sich in dem Raum 6 in Richtung der Öffnung 3, erreicht diese jedoch nicht. Der Handschuh 7 ist für die Aufnahme und den Schutz einer Hand, die Stulpe 7.1 ist als Aufnahme und Schutz des Armes einer die Vorrichtung bedienenden Person ausgebildet.

In diesem ersten Betriebszustand der Vorrichtung kann der Balg 5 und/oder der Handschuh 7 ausgetauscht werden, ohne dass es zu unerwünschten Stoff-und/oder Energieflüssen zwischen dem Arbeitsraum 1 und der Umgebung 10 kommt. Ferner kann der Handschuh 7 in dieser Position verbleiben, solange keine Handhabungen in dem Arbeitsraum 1 erfolgen. Der Handschuh 7 und der Balg 5 sind somit nicht ständig den tiefkalten Medien des Arbeitsraumes 1 ausgesetzt.

In einem in Fig. 2 gezeigten zweiten Betriebszustand der Vorrichtung ist das Verschlusselement 4 aus der Öffnung 3 entfernt und der Handschuh 7 durch die Öffnung 3 hindurch in den Arbeitsraum 1 eingeführt. Der Balg 5 ist in der axialen Richtung seiner Ausdehnung zusammengefaltet und der Raum 6 dadurch stark verkleinert. Der Arbeitsraum 1 und der Raum 6 sind nun nicht mehr gegeneinander abgeschlossen, jedoch besteht über die an der zweiten Stirnseite 5.2 geklemmte Stulpe 7.1 weiterhin ein Abschluss zur Umgebung 10. In geringen Maßen kann tiefkaltes Medium durch die Öffnung 3 in den Raum 6 vordringen und dabei in Kontakt mit dem Balg 5 treten. Durch Abstimmung des Innendurchmessers der Öffnung 3 und des Außendurchmessers der Stulpe 7.1 wird der Medienzutritt in den Raum 6 gering gehalten und die Ausbildungen von Strömungen tiefkalten Mediums durch den Raum 6 hindurch vermieden.

In weiteren Ausführungen der Vorrichtung kann der Balg 5 zusätzlich gegen Wärme, Kälte oder Strahlung isoliert sein. Er kann zudem anders geformt sein z.B. konisch oder als Faltenbalg ausgebildet sein. Umfänglich verlaufend angeordnete Versteifungen können einzelne Ringe oder Hülsen sein. Es können auch alle oder einige der Versteifungen miteinander verbunden sein.

Der Handschuh 7 kann weiterhin aus jedem für den Verwendungszweck geeigneten Material bestehen. Die Stulpe 7.1 kann, insbesondere bei mechanisch wenig belastbarem Material oder geringen Wanddicken der Handschuhe 7, in seinem hinteren Bereich aus einem mechanisch belastbaren Material bestehen oder größere Wanddicken aufweisen, um eine sichere Verbindung mit dem zweiten Verbindungselement 9 zu ermöglichen. Die Materialien von Handschuh 7 und Stulpe 7.1 können voneinander verschieden sein.

Die Verbindungen zwischen Balg 5, erstem Verbindungselement 8 und/oder zweitem Verbindungselement 9, zwischen Balg 5 und Stulpe 7.1 sowie zwischen Balg 5 und Wand 4 können sowohl kraft- und/oder form- und/oder stoffschlüssig erfolgen.

Die erfindungsgemäße Vorrichtung kann an Wänden von Arbeitsräumen oder Handschuhboxen für eine Vielzahl von Anwendungen in den Bereichen der Produktion, Medizin, Forschung und Dienstleistung verwendet werden. Die Vorrichtung eignet sich auch zur modularen Nachrüstung bestehender Anlagen. Durch die Vorrichtung kann der Verschleiß der teils kostenintensiven Handschuhe deutlich verringert werden. Zudem ist der Austausch der Handschuhe leicht möglich, ohne dass es dabei zu unerwünschten Stoff- und Energieflüssen zwischen dem Arbeitsraum und der Umgebung kommt.

### Bezugszeichen

- 1: Arbeitsraum
- 2: Wand
- 3: Öffnung
- 4: Verschlusselement
- 5: Balg
- 5.1: erste Stirnseite
- 5.2: zweite Stirnseite
- 6: Raum
- 7: Handschuh
- 7.1: Stulpe
- 8: erstes Verbindungselement
- 9: zweites Verbindungselement
- 10: Umgebung

## Patentansprüche

1. Vorrichtung zum Handhaben von in einem abgeschlossenen Arbeitsraum befindlichen Gegenständen mit Handschuhen, die durch Öffnungen in der Wand des Arbeitsraum in den Arbeitsraum einführbar und mit der Wand verbunden sind, weiterhin mit außerhalb des Arbeitsraumes angeordneten und je einem Handschuh zugeordneten Bälgen, die in ihrer zu den Öffnungen senkrecht weisenden axialen Ausdehnung raffbar sind und den Arbeitsraum gegen die Umgebung abschließen und ferner je einen Raum umgrenzen, in welchen der zugeordnete Handschuh vollständig aus dem Arbeitsraum zurück gezogen werden kann, **dadurch gekennzeichnet,**
- **dass** jeder Balg (5) in seiner nicht gerafften Grundform ein Hohlkörper mit einer ersten und einer zweiten Stirnseite (5.1, 5.2) ist, wobei an der ersten Stirnseite (5.1) ein erstes Verbindungselement (8) zur Verbindung des Balges (5) mit der Wand (2) und an der zweiten Stirnseite (5.2) ein zweites Verbindungselement (9) zur Verbindung einer Stulpe (7.1) des Handschuhs (7) mit dem Balg (5) so angeordnet und ausgeführt sind, dass durch die verbundene Stulpe (7.1) des Handschuhs (7) der Raum (6) über die zweite Stirnseite (5.2) gegen eine Umgebung (10) der Vorrichtung nach außen abgeschlossen ist und ein Eingriff in den Handschuh (7) von der Umgebung (10) der Vorrichtung aus möglich bleibt,
- **dass** die Außenabmaße des zweiten Verbindungselements (9) in einer Ebene parallel zur Öffnung (3) größer als die freien Innenabmaße der Öffnung (3) sind, wodurch die Öffnung (3) für das zweiten Verbindungselement (9) als Anschlag wirkt und ein Eintreten des Balges (5) in den Arbeitsraum (1) verhindert wird und
- **dass** ein Verschlusselement (4) vorhanden ist, durch welches der von dem Balg (5) umgrenzte Raum (6) bei vollständig zurückgezogenem Handschuh (7) über die erste Stirnseite (5.1) gegen den Arbeitsraum (1) abschließbar ist.

2. Vorrichtung nach Anspruch 1, **dadurch gekennzeichnet, dass** der Balg (5) umfänglich verlaufend angeordnete Versteifungen aufweist.

3. Vorrichtung nach Anspruch 1 oder 2, **dadurch gekennzeichnet, dass** die Verbindung des Balges (5) an der Wand (2) eine lösbare Verbindung ist.

4. Vorrichtung nach Anspruch 1 oder 2, **dadurch gekennzeichnet, dass** die Verbindung der Stulpe (7.1) des Handschuhs (7) mit dem Balg (5) eine lösbare Verbindung ist.

5. Vorrichtung nach Anspruch 3 und 4, **dadurch gekennzeichnet, dass** die lösbare Verbindung aus einer Schraub-, Klemm-, Steck- und Bajonettverbindungen umfassenden Gruppe ausgewählt ist.

6. Vorrichtung nach Anspruch 4, **dadurch gekennzeichnet, dass** mit dem Balg (5) Handschuhe (7) mit voneinander verschiedenen Eigenschaften mit der Stulpe (7.1) verbunden sind.

7. Verwendung einer Vorrichtung nach einem der vorhergehenden Ansprüche an Arbeitsräumen (1), in denen Gegenstände unter Bedingungen gehandhabt werden, die aus einer außerhalb physiologischer Bereiche liegender thermischer, außerhalb physiologischer Bereiche liegender chemischer, außerhalb physiologischer Bereiche liegender strahlender, infektiöser oder steriler Bedingungen sowie deren Kombinationen umfassenden Gruppe ausgewählt sind.
